# EUROPEAN PATENT SPECIFICATION

(11) **EP 0 428 191 B1**
(45) Date of publication and mention of the grant of the patent: **15.09.1993**
(21) Application number: 90200472.0
(22) Date of filing: 28.02.1990
(51) Int. Cl.: F16D 65/092, F16D 69/04

(54) **Friction shoe for disk brakes**
Reibbacke für Scheibenbremsen
Patin de friction pour freins à disque

(30) Priority: 15.11.1989 IT 2210389 U
(43) Date of publication of application: 22.05.1991
(73) Proprietor: SO.C.I.MI SOCIETA COSTRUZIONI INDUSTRIALI MILANO S.P.A., I-20156 Milan (IT)
(72) Inventor: Marzocco, Alessandro, I-20149 Milan (IT)
(74) Representative: Fusina, Gerolamo

(56) References cited:
- EP-A- 0 026 578
- EP-A- 0 102 469
- EP-A- 0 106 782
- WO-A-87/06315
- FR-A- 1 259 664

## Description

The present invention relates to a friction shoe for disk brakes.The prior art is known e.g. from document EP-A-106 782.

Friction shoes for disk brakes are known from the prior art, in which the friction element material is of organic nature.

Such a material, although is endowed with good characteristics as regards the operating performances normally requested from a brake, are undoubtedly affected by some disadvantages.

First of all, this type of friction elements are sensible to the phenomenon of "fading", i.e., of the decrease in friction coefficient value with increasing temperatures in case the same brake is used for a longer time.

Furthermore, in this type of brake shoes, the friction coefficient decreases in the presence of water.

In case of very severe braking conditions, the above cited brake shoes can also develop bad-smelling fumes already at disk temperatures of the order of from 480°C to 500°C; should such disk temperatures reach or exceed the value of 600°C, even flames can spring.

Other types of friction shoes are constituted by discoidal slabs of sintered material contained inside a sleeve made from a metal material softer that the sintered discoidal slab; such discoidal slabs are fastened onto a base plate by means of a tang -- which constitutes one single piece with said discoidal-shaped slab -- which is riveted onto said base plate.

This solution, although prevents the disadvantages shown by the friction shoes made from the organic material, leads often to the loss of the discoidal slabs during the unavoidable extreme braking conditions, and, above all, the mechanical strength offered by the system does not make it possible discoidal slabs to be made available, which are high enough in order to secure a good useful life of the friction shoes, consistent with the brake operations requirements.

The purpose of the present invention is of obviating the disadvantages which affect the prior art, as hereinabove cited.

In view of such a purpose, a friction shoe for disk brakes was provided, which is constituted by a base plate provided with a plurality of bores, which bores are adapted to receive respective friction elements made from a sintered material, said base plate being associated with a second plate for fastening said friction shoe to a relevant shoe-carrier element, which friction shoe is characterized in that said friction elements are constituted by a cylinder made from a sintered material contained inside the interior of a cylindrical sleeve made from a soft metal, said sleeve being equipped, at its bottom, with a tang provided with a conical hollow, said tang being adapted to be inserted into, and riveted inside, said bores provided on said base plate.

According to an exemplifying form of practical embodiment according to the instant finding the bores provided on said base plate are given a cone-frustum shape.

Furthermore, said fastening plate is made integral wich said base plate by means of a riveted joint, and is provided with at least two bent flanges protruding from said base plate, which flanges are suitable for being inserted into a suitable seat provided in a shoe-carrier element.

According to the instant invention, the base plate can be furthermore made from carbon steel, or from hardened and tempered steel or stainless steel, as a function of the type and of the environment in which the brake is designed to operate, e.g., in street cars, underground railway cars, railway cars, or vehicles for public transport in general.

The sleeves of said friction elements can be made, for exemplifying purposes, from phosphorus brass, or from aluminum-magnesium-silicon alloys.

The characteristics and further advantages according to the present invention will be clearer from the following illustrative, non-limitative disclosure made by referring to the hereto attached drawing tables, in which:

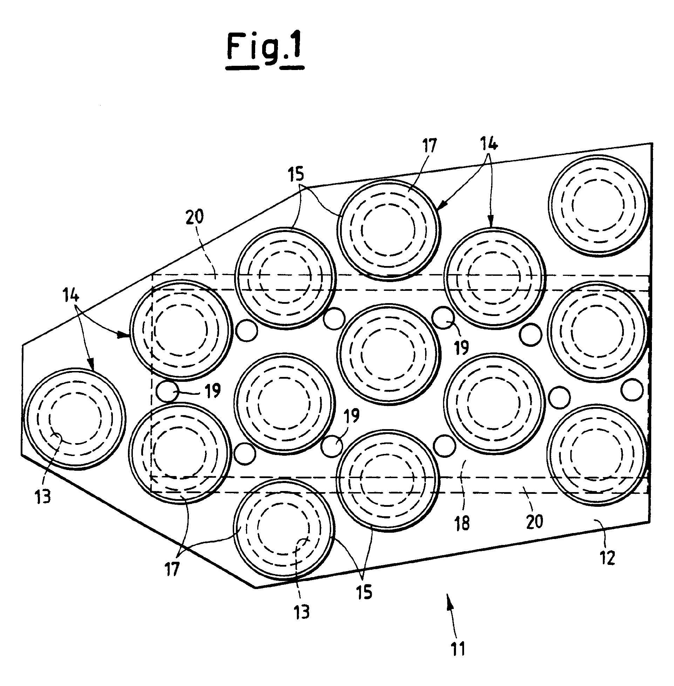

Figure 1 shows a plan view of a brake shoe according to the present invention;
Figure 2 shows a partially exploded, sectional view of the friction element of Figure 1, and
Figure 3 shows a partially sectional assembled view of the elements of Figure 2.

Referring to the figures, a friction shoe according to the present invention is generally indicated by the reference numeral 11. Said friction shoe is constituted by a base plate 12 provided with a plurality of bores 13 inside which friction elements as respectively indicated by the reference numeral 14, are inserted.

The friction elements 14 are constituted by a cylindrical hollow sleeve 15 having a height of at least 30 mm, which is provided, at its bottom, with a tang 16 having a bottom conical hollow. Inside the sleeve a solid cylinder 17, made from a sintered material, is inserted.

The bores 13, which are given a cone-frustum shape, are suitable for receiving the tangs 16, in that their smallest diameter is approximately equal to the diameter of said tangs.

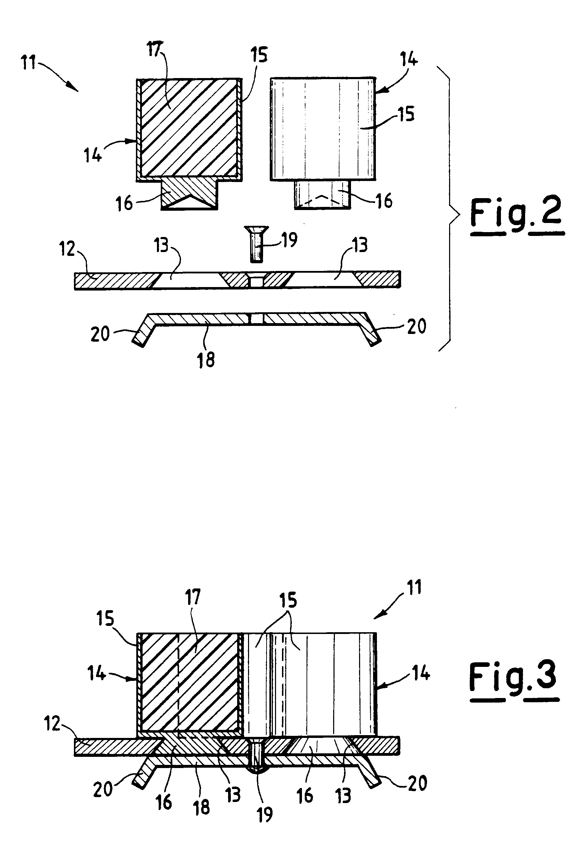

Once that the friction elements 14 are inserted inside the bores 13, the tangs 16 are riveted by means of a suitable tool, and the upset material completely fills the residual available room inside the cone-frustum shaped bores 13 (as shown in Figure 3).

When the riveting of the friction elements is finished, a second plate 18 is fastened onto the base plate 18 by means of rivets 19.

The second plate 18 is equipped with flanges 20, which are so bent as to protrude from the surface of the base plate opposite to the base plate surface on which the friction elements are fastened; said second plate 18, and, in particular, its flanges 20, are used in order to fasten the friction shoe to a friction shoe carrier element (not shown in the figures).

Thanks to its structural simpleness, the friction shoe 11 according to the present invention is easy to be manufactured and is versatile in use; and, furthermore, the special cone-frustum shape of the bores 13 and of the tangs 16 give the present shoe, together with the riveting, high characteristics of strength and useful life.

In fact, such a type of fastening of the friction elements 14 enables the structure to easily withstand the high bending torques acting on the riveted joint, as well as the high shear stresses acting on the cross section of the riveted joint, in particular at high temperatures, while simultaneously making it possible friction elements of a height of at least 30 mm to be used, with no risks of loss due to a disjunction of said elements.

Therefore, the hereinabove disclosed features endow the friction shoe according to the instant invention with extremely good braking characteristics, as well as with extremely good characteristics of resistance to stress, and, ultimately, of long useful life.

## Claims

1. Friction shoe (11) for disk brakes constituted by a base plate (12) provided with a plurality of bores (13), which bores are adapted to receive respective friction elements (14) made from a sintered material, said base plate (12) being associated with a second plate (18) for fastening said friction shoe (11) to a relevant shoe-carrier element, which friction shoe (11) is characterized in that said friction elements (14) are constituted by a cylinder made from a sintered material (17) contained inside the interior of a cylindrical sleeve (15) made from a soft metal, said sleeve (15) being equipped, at its bottom, with a tang (16) provided with a conical hollow, said tang (16) being adapted to be inserted into, and riveted inside, said bores (13) provided on said base plate (12).

2. Friction shoe according to claim 1, characterized in that said bores (13) of said base plate (12) are of cone-frustum shape.

3. Friction shoe according to claim 1, characterized in that a fastening plate (18) is made integral with the base plate (12) by means of a riveted joint (19).

4. Friction shoe according to claim 1, characterized in that said fastening plate (18) is provided with at least two bent flanges (20) protruding from the surface of said base plate (12), suitable for being inserted into a suitable seat provided on a shoe-carrier element.

5. Friction shoe according to claim 1, characterized in that said friction elements (14) have a height of at least 30 mm.

6. Friction shoe according to claim 1, characterized in that said base plate (12) is made from carbon steel.

7. Friction shoe according to claim 1, characterized in that said base plate (12) is made from hardened and tempered steel.

8. Friction shoe according to claim 1, characterized in that said base plate (12) is made from stainless steel.

9. Friction shoe according to claim 1, characterized in that said sleeves (15) of said friction elements (14) are made from phosphorus brass.

10. Friction shoe according to claim 1, characterized in that said sleeves (15) of said friction elements (14) are made from aluminum-magnesium-silicon alloy.

## Patentansprüche

1. Reibbacke (11) für Scheibenbremsen, welche von einer Basisplatte (12) mit einer Vielzahl von Bohrungen (13) gebildet ist, welche für die Aufnahme entsprechender Reibelemente (14) aus Sintermaterial ausgebildet sind, wobei der Basisplatte (12) eine zweite Platte (18) zur Befestigung der Reibbacke (11) an einem entsprechenden Backenträgerelement zugeordnet ist, dadurch gekennzeichnet, daß die Reibelemente (14) von einem Zylinder aus einem Sintermaterial (17) gebildet sind, welches im Inneren einer zylindrischen Hülse (15) aus einem Weichmetallmaterial enthalten ist, wobei die Hülse (15) an ihrem Boden mit einem Fortsatz (16) mit einem konischen Hohlraum ausgebildet ist und wobei der Fortsatz (16) in die in der Basisplatte (12) angeordneten Bohrungen (13) einsetzbar und in diesen vernietbar ist.

2. Reibbacke nach Anspruch 1, dadurch gekennzeichnet, daß die Bohrungen (13) der Basisplatte (12) Kegelstumpfform aufweisen.

3. Reibbacke nach Anspruch 1, dadurch gekennzeichnet, daß die Befestigungsplatte (18) mit der Basisplatte (12) durch eine Nietverbindung 19 verbunden ist.

4. Reibbacke nach Anspruch 1, dadurch gekennzeichnet, daß die Befestigungsplatte (18) mit wenigstens zwei gebogenen Flanschen (20) ausgebildet ist, welche von der Oberfläche der Basisplatte (12) vorragen und welche für ein Einfügen in einen geeigneten Sitz am Backenträgerelement ausgebildet sind.

5. Reibbacke nach Anspruch 1, dadurch gekennzeichnet, daß die Reibelemente (14) eine Höhe von wenigstens 30 mm aufweisen.

6. Reibbacke nach Anspruch 1, dadurch gekennzeichnet, daß die Basisplatte (12) aus Kohlenstoffstahl gebildet ist.

7. Reibbacke nach Anspruch 1, dadurch gekennzeichnet, daß die Basisplatte (12) aus einem gehärteten und getemperten Stahl gebildet ist.

8. Reibbacke nach Anspruch 1, dadurch gekennzeichnet, daß die Basisplatte (12) aus rostfreiem Stahl gebildet ist.

9. Reibbacke nach Anspruch 1, dadurch gekennzeichnet, daß die Hülsen (15) der Reibelemente (14) aus Phosphorguß gebildet sind.

10. Reibbacke nach Anspruch 1, dadurch gekennzeichnet, daß die Hülsen (15) der Reibelemente (14) aus einer Aluminium-Magnesium-Silizium-Legierung gebildet sind.

## Revendications

1. Patin de friction (11) pour freins à disque constitué d'une plaque de base (12) pourvue d'une pluralité de perçages (13), ces perçages étant adaptés à recevoir des éléments de friction (14) respectifs fabriqués en matériau fritté, la plaque de base (12) étant associée à une seconde plaque (18) destinée à fixer le patin de friction (11) à un élément de support de patin correspondant, caractérisé en ce que les éléments de friction (14) sont constitués d'un cylindre en matériau fritté (17) logé à l'intérieur d'un manchon cylindrique (15) en métal doux, le manchon (15) étant pourvu, sur son fond, d'un talon (16) présentant un évidement conique, ce talon (16) pouvant être inséré dans, et riveté à l'intérieur des perçages (13) ménagés sur la plaque de base (12).

2. Patin de friction selon la revendication 1, caractérisé en ce que les perçages (13) de la plaque de base (12) présentent une forme tronconique.

3. Patin de friction selon la revendication 1, caractérisé en ce qu'une plaque de fixation (18) ne forme qu'une seule pièce avec la plaque de base (12), au moyen d'un assemblage rivé (19).

4. Patin de friction selon la revendication 1, caractérisé en ce que la plaque de fixation (18) est pourvue d'au moins deux brides recourbées (20) faisant saillie de la surface de la plaque de base (12), pouvant être insérées dans un siège adapté d'un élément porte-patin.

5. Patin de friction selon la revendication 1, caractérisé en ce que les éléments de friction (14) mesurent au moins 30 mm de haut.

6. Patin de friction selon la revendication 1, caractérisé en ce que la plaque de base (12) est constituée en acier au carbone.

7. Patin de friction selon la revendication 1, caractérisé en ce que la plaque de base (12) est constituée en acier durci et trempé.

8. Patin de friction selon la revendication 1, caractérisé en ce que la plaque de base (12) est constituée en acier inoxydable.

9. Patin de friction selon la revendication 1, caractérisé en ce que les manchons (15) des éléments de friction (14) sont constitués en laiton phosphoreux.

10. Patin de friction selon la revendication 1, caractérisé en ce que les manchons (15) des éléments de friction (14) sont constitués en un alliage aluinium-magnésium-silicone.
